# EUROPEAN PATENT APPLICATION

(11) **EP 1 059 597 A2**
(43) Date of publication of application: **13.12.2000**
(21) Application number: 00111865.2
(22) Date of filing: 08.06.2000
(51) Int. Cl.: G06F 17/60

(54) **A system and method for doing electronic commerce**

(30) Priority: 10.06.1999 JP 16420799
(71) Applicant: Hitachi, Ltd., Chiyoda-ku, Tokyo 101-8010 (JP)
(72) Inventor: Miyamoto, Yoh, Hitachi, Ltd., Intel. Prop. Group, Chiyoda-ku, Tokyo 100-8220 (JP); Kosukegawa, Yuichi, Hitachi, Ltd.,Intel.Prop.Group, Chiyoda-ku, Tokyo 100-8220 (JP); Ishikawa, Tomomu, Hitachi, Ltd.,Intel.Prop.Group, Chiyoda-ku, Tokyo 100-8220 (JP); Matsuoka, Katsumasa, Hitachi, Ltd.Intel.Prop.Group, Chiyoda-ku, Tokyo 100-8220 (JP); Toshima, Hisashi, Hitachi, Ltd. Intel.Prop.Group, Chiyoda-ku, Tokyo 100-8220 (JP)
(74) Representative: Beetz & Partner Patentanwälte

(57) **Abstract**

The present invention provides an electronic commerce system on a public network D such as the Internet, including a user terminal A' used by a user A for buying and receiving products or services, an EC site B' provided by a service provider B for browsing and ordering the products or services, and a settling site C' provided by a settlement agent C having contracts with the user A and service provider B, acting for payment concerning transactions therebetween and implementing online application of services through the public network, where the terminal A', site B' and site C' are interconnected by the public network. The EC site B' provides an EC site server supplied by the service provider and a communication server performing communication with a program provided by the settlement agent acting for payment C and sent to the user terminal A'. The settling site C' provides a settling site server acting for payment for communicating with the user terminal A' to inspect the transaction information by using the Internet mark (IM) procedure for protecting information against alteration. The electronic commerce system in accordance with the present invention may provide the convenience as well as the protection of information against sniffer while using the public network.

## Description

### BACKGROUND OF THE INVENTION

### Field of the Invention:

The present invention relates to an electronic commerce system using the public network, more particularly relates to an electronic commerce system, which may improve the convenience when a user is provided with a kind of services through a hone page of the service provider performing commerce established on the Internet.

In general, in the field of commercial transaction, there are organizations which have businesses for providing commercial products or services (hereinafter, services including products will be referred to as 'services'), in which the scale of the organizations varies from an individual or a small shop to a large company. When such an organization wishes to enter into business of mail order or online transaction, the payment method and conditions followed by the services should be necessarily decided for the price of provided services.

In the mail-order and online transaction businesses as described above, the security and the reliability are the most important concern, and there are problems on the payment, appropriate billing and as for charging from the organization (surplus charge and the abuse of user information), and on the leakage of user information; there may also be problems of usability and cost concerning the payment processing.

Some examples of the method frequently used in these days and the problems thereof will be described below.

### (1) Membership system that a user has to subscribe to a group run by a service provider performing commerce.

This system limits the users to its members of transaction system in order to charge the bank account of members. In this system, a contract for charging an account should be made between the member, the service provider performing commerce, and the monetary facilities. Any troubles about the charged price of transactions will be individually negotiated and settled in accordance with the contract made between the subscriber and the service provider performing commerce.

In this system there are problems as follows:
(1) A contract should be made for billing an account and the system is not flexible enough for a service provider to perform small business.
(2) The variety of goods (or services) is limited due to the membership nature.
(3) In case of goods (and services) that a user will not buy frequently, the complicated contract itself will be an obstacle.
(4) The membership users should provide their information to the service provider performing commerce. However it will be difficult for the service provider performing commerce to be trusted by the members, if the provider is not well known.
(5) It may be difficult to prevent any accident in which for example a service provider performing commerce send a product to its customers without agreement based on the member information and charges the accounts of customers.
(6) If a transaction on credit is not available, the user should pay at once.

The usage of the above-mentioned type of systems will be described as follows:
(a) A user subscribes to a trading service provided by an organization, which deals with commercial transactions. The member user will contract with the service provider performing commerce on the settlement of billing charged for the price of various services and fulfill a contract with monetary facilities on the billing on his/her account.
(b) The member user uses the system provided by the organization to select a product or a service that he/she wishes to buy.
(c) The member user makes a contract with the organization by telling the selected product or service to the organization. At this step only the information of the product(s) or service(s) selected by the member user and of the member user will be exchanged.
(d) The organization which deals with the product or service provides the selected item to the user based on the membership information, while at the same time the organization charges the account of the user.
(e) If the selected item is a product being deliverable, a shipper carries the product or service to the member user.
(f) The member user receives the item selected and pays the price thereof to the organization through monetary facilities.

### (2) A system that the price will be paid in advance through monetary facilities such as a bank.

In this system, after a contract or an agreement of a contract on the transactions have been made or after an agreement on the contract between the user and the organization that deals with services, a user pays the price of one or more goods (or services) in advance through the network of a monetary facility and the like to the organization, which, in turn, after confirming the payment, delivers the ordered product or service to the user. The amount of purchase order is billed in advance and prepaid by the user, there will be few troubles on the billing, charge and payment, and any individuals and small trading company may readily trade in accordance with this system. In addition the transactions in accordance with this system may be processed simply online, any intangible goods (and services) may be subjected to the transactions. The problems of this system are as follows:
(1) Some time and labor such as payment and the authentication thereof will be needed from the time of contract or agreement to the time when a user actually obtains a product or service.
(2) The users often need to pay a remittance charge to the monetary facility. If the remittance charge is high with respect to the amount of tradable product and service, the users won't use a payment via a wire transfer.
(3) The user will pay for a product before the user can confirm the actual product ordered. The users are not allowed to inspect the product or service before payment. In addition it is not assured whether the product will be exactly delivered to the user who is ordering.
(4) When the amount to be paid is transferred to a wrong address or account the user is unlikely to be refund.
(5) When a sale on credit is not available, the user should pay for all at once.

The usage of the above-mentioned type of systems will be described as follows:
(a) A user uses the system provided by the service provider performing commerce to select one or more services or goods available.
(b) The user tells the trading company the selected product(s) and service(s) (contract or agreement). The information to be exchanged between the user and the company performing commerce contains the item(s) to be shipped, the billing address, the shipping address, and payment method.
(c) The user remits the amount to the address specified by the company performing commerce through a monetary facility, and communicates to the company if necessary.
(d) The company performing commerce confirms the money received.
(e) The company performing commerce ships the ordered item(s) to the user, based on the information supplied by the user at the time of contract.
(f) If the service includes goods deliverable to a destination, a carrier delivers to the user the item(s) (product(s) or service(s)).
(g) The user receives the ordered item(s).

### (3) A COD (cash on delivery) system combined with a distributor.

In this system, after a contract made between the user and the company performing commerce, items ordered are delivered by a carrier to the user and the delivery is in exchange for the cash. The cash collected will be paid later to the company performing commerce by the distributor. This system may be used by any individuals and small company without any problems.

The problems of this system will be described as follows:
(1) The system is applicable only to the goods (and services) distributable through the carrier.
(2) The payment method is limited to the payment all at once since a sale on credit is not available.
(3) Collecting service costs in addition to the price of the services.

The usage of this type of systems will be described as follows:
(a) A user selects one or more goods (or services) using the system provided by the company performing commerce.
(b) The user tells the company performing commerce the selected product(s) and service(s) (contract or agreement). The information to be exchanged between the user and the company performing commerce contains the item(s) to be shipped, the billing address, the shipping address, and payment method.
(c) The company performing commerce ships the ordered item(s) to the user, based on the information supplied by the user at the time of contract.
(d) A carrier delivers to the user the ordered item(s) with cash on delivery.
(e) The user receives the ordered item(s).
(f) The carrier delivers the cash collected from the user to the company performing commerce.

### (4) A system that an agency intermediates for the price settlement (such as credit card, sale-on-credit company) [part I]

This settlement system is most usually used. The remittance and acceptance of charged price will be intermediated by an agent between the users and the company performing commerce. A user makes a contract with an agent prior to acting, the agent investigates the creditability of the user such as credit solubility based on the user status and the like to delegate the payment within a limit of amount decided in accordance with the solubility of the user. In other words the user who desires a transaction tells his/her number of credit membership to the trading service provider, which in turn submits to the agent a bill on that number. The charges on credit will be collected for a period of time and the user will be charged later. The user may file an objection to any incorrect charges such as the theft and abuse of number. The transactions in accordance with this system may be processed simply online, any intangible goods (and services) may be subjected to the transactions. For an expensive item, the agent may accept the sale on credit after separately investigating the current status of solubility of the user. In this system the contract of payment will be made between the agent and the company performing commerce, therefore a company performing commerce having troubles on the transactions may be rejected.

The problems of this system will be described as follows:
(1) Since the billing to the agent will be made for the number of the user, and charged later to the account of user, there may be cases in which a company performing commerce that intends to transact with the agent may bill too expensive fee or request unfair/illegal charges, or the number is leaked to a third party which intends to abuse and practice deception thereon.
(2) The user should make a contract in advance with the agent.

The usage of this type of systems will be described as follows: It should be noted here that a contract as to substitute payment is assumed to be already made between the agent and the company performing commerce.
(a) A user makes a contract with the agent as to the substitute payment.
(b) The user selects one or more goods (or services) using the system provided by the company performing commerce.
(c) The user tells the company performing commerce the selected item(s) (contract or agreement). The information to be exchanged between the user and the company performing commerce contains the item(s) to be shipped, the billing address, the shipping address, and payment method.
(d) The company performing commerce asks the agent for the current solubility of the user based on the information supplied by the user.
(e) The company performing commerce delivers the item(s) selected based on the information supplied by the user at the time of contract.
(f) If the service ordered includes goods deliverable to a destination, a carrier delivers to the user the item(s) (product(s) or service(s)).
(g) The user receives the ordered item(s).
(h) The agent charges later the account of user and the user will pay the amount billed.

### (5) A system that an agency intermediates for the price settlement (such as credit card, sale-on-credit company) [part II]

This system is a revised version so as to solve the trouble on security breach found in the above-mentioned system (4). The framework of system such as the contract made between a users and the agency, the contract made between a company performing commerce and the agency and the like will be the same, with the exception that in this system, with respect to the payment, the user notifies the system supplied by the agency of the price and the company performing commerce for each transaction to ask and obtain the consent of use of service for that transaction. The user having received a number issued by the agent for that transaction tells the number to the company performing commerce to accomplish a transaction.

Since the destination of payment, the amount of payment, and the billing address are predefined in this system, any incorrect bills by the company performing commerce or abuses by the leakage of number may be much difficult. In addition, prior to the actual transaction the contents of transaction can be confirmed from the agency. The transaction in accordance with this system may be processed online; any intangible goods (and services) may be subjected to the transactions.

The problems of this type of system will be described as follows:
(1) The system is complicated for the user, because the user needs to communicate with the system supplied by the agency, in addition to a system supplied by the company performing commerce, to tell the company performing commerce the information obtained from the agency, for each transaction.
(2) The user has to make a contract with the agency in advance.

The usage of this type of system will be described as follows: It should be noted here that the contract on the action of payment by the agency for the user is assumed to be made in advance between the agency and the company performing commerce.
(a) A user makes a contract with an agency with respect to the delegation of payment.
(b) The user selects one or more goods (or services) using the system provided by the company performing commerce.
(c) The company performing commerce indicates the amount corresponding to the goods (or services) selected by the user.
(d) The user asks the agency for the delegation of payment on behalf of the user in this transaction. The information supplied will be the membership of the user for the agency, the information concerning the company performing commerce, and the amount to be paid.
(e) After confirming the user, the agency notifies the user of a grant of transaction and a one-time usage code.
(f) The user tells the company performing commerce the item(s) selected and the one time usage code supplied by the agency (contract or agreement). The information to be exchanged between the user and the company performing commerce contains the item(s) selected by the user, the shipping address of the user, the agency address, and the one time usage code supplied by the agency.
(g) The company performing commerce delivers the item(s) selected by the user based on the information supplied by the user at the time of contract.
(h) If the service ordered includes goods deliverable to a destination, a carrier delivers to the user the item(s) (product(s) or service(s)).
(i) The user receives the item(s).
(j) The agency charges the account of user for the sum of items and the user pays the sum charged.

In the aforementioned transaction system of the prior Art, each system has problems respectively. The systems (2) through (5) above are multi-purposed and often used. The systems (2) and (5) above in particular may be applied to the services or goods other than an intangible service, with the minimum risk of information leakage and less risk of abuse. However the systems (2) and (5) above have a problem that the usage is complicated and somewhat limited.

The system (1) above has some troublesomeness that it is complicated and the contract should be made for each transaction since there are numerous companies in business, and that the credibility for the trading service providers can not be sufficiently understood. The system (3) above has a problem that it can not be applied to products or services that are not deliverable. The system (4) above may support other procedures than that described above such as insurances, however has problems such as the credibility of the company performing commerce, possible leakage of information, and potential risk of abuse.

### SUMMARY OF THE INVENTION

The object of the present invention is to provide an electronic commerce system using a public network, which is suitable for the system (2), (4) and (5) above, and may improve the convenience and protection against the information leakage.

In accordance with the present invention, the object may be achieved by providing an electronic commerce system on a public network interconnecting: a user terminal for use by a user; an EC site provided on a public network by a service provider, accessible from the public network, for providing a framework for browsing the goods (and services) and ordering a transaction; a settling site provided by a settlement agent making contract with the user and service provider to carrying out the transfer of amount of a transaction between the user and the service provider, in which: an information required for the transaction and input by the user at the user terminal is subdivided into an information needed by the service provider and an information needed by the settlement agent;
the information needed by the service provider is transmitted to the EC site and the information needed by the settlement agent is transmitted to the settling site.

In addition the object of the present invention may be achieved by providing a system in which the information needed by the service provider, being transmitted to the EC site includes a user address, a shipping address, and a process handling number of the transaction transmitted from the settlement agent to the user; and
the information needed by the settlement agent, being transmitted to the settling site includes a contract number provided by a contract between the user and the settlement agent, a business content of a transaction at this time, and an information of the service provider.

Furthermore, the object of the present invention may be achieved by providing a system in which: when the settling site of the settlement agent is a site established by a monetary facility, the information needed by the settlement agent, being transmitted to the settling site includes an information about a request on a transfer of the amount from a user's account to a service provider's account.

Furthermore, the object of the present invention may be achieved by providing a system in which: there is provided a communication server provided by the settlement agent in the EC site of the service provider and the user inputs an information required for a transaction through an interface display screen provided by the communication server and displayed on the user terminal.

Furthermore, the object of the present invention may be achieved by providing a system in which: an authentication is provided by an Internet mark checking procedure for protecting the information required for the transaction transmitted by the user against any unauthorized alteration.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

### BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention. In the drawings,
Fig. 1 shows a block diagram of an exemplary configuration (part I) of an electronic commerce system in accordance with an embodiment of the present invention;
Fig. 2 shows a block diagram of another exemplary configuration (part II) of an electronic commerce system in accordance with an embodiment of the present invention;
Fig. 3 still shows a block diagram of another exemplary configuration (part II) of an electronic commerce system in accordance with an embodiment of the present invention;
Fig. 4 shows a flow chart illustrating the process in an electronic commerce using the electronic commerce system in accordance with an embodiment of the present invention;
Fig. 5 shows a flow chart illustrating the detailed process (part I) in an electronic commerce using the electronic commerce system in accordance with an embodiment of the present invention;
Fig. 6 shows a flow chart illustrating the detailed process (part II) in an electronic commerce using the electronic commerce system in accordance with an embodiment of the present invention;
Fig. 7 shows an exemplary display screen displayed on a display unit of a user terminal;
Fig. 8 shows another exemplary display screen displayed on a display unit of a user terminal;
Fig. 9 shows still another exemplary display screen displayed on a display unit of a user terminal;
Fig. 10 shows still another exemplary display screen displayed on a display unit of a user terminal;
Fig. 11 shows still another exemplary display screen displayed on a display unit of a user terminal;
Fig. 12 shows still another exemplary display screen displayed on a display unit of a user terminal;
Fig. 13 shows still another exemplary display screen displayed on a display unit of a user terminal;
Fig. 14 shows an exemplary display screen displaying a message expressing a gratitude for the use to a user without using IM interface; and
Fig. 15 shows a flow chart illustrating part of detailed process in accordance with a preferred embodiment of the present invention, in case in which the settlement agent is a monetary facility.

### DETAILED DESCRIPTION OF THE PREFERRED EMBODIMENTS

Some preferred embodiments of electronic commerce system in accordance with the present invention will be described below in greater details with reference to the accompanying drawings.

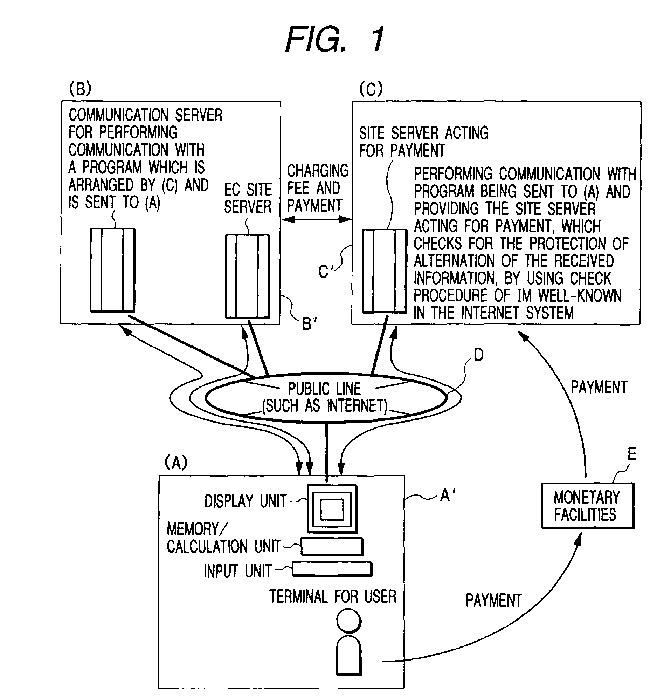

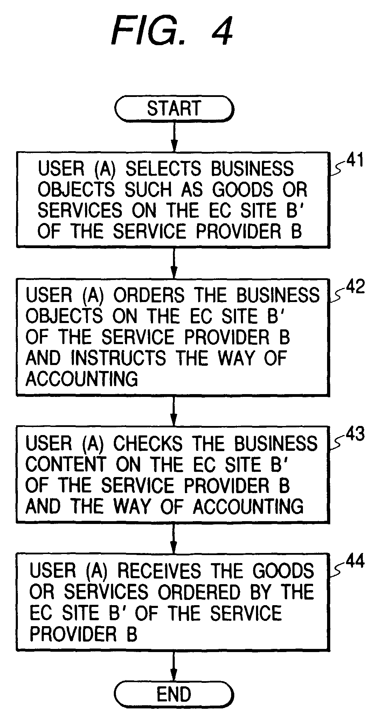

Fig. 1 to Fig. 3 show block diagrams illustrating some exemplary configurations of an electronic commerce system in accordance with embodiments of the present invention, Fig 4 shows a flow chart illustrating the process in an electronic commerce using the electronic commerce system in accordance with an embodiment of the present invention. In Fig. 1 to Fig. 3, a reference numeral A designates to a user, there is provided a user terminal A', a service provider B, an EC site of the service provider B', a settlement agent C, a settlement site of the agent C', a public network D, and a monetary facility E.

As shown in Fig. 1, an embodiment of the electronic commerce system in accordance with the present invention comprises:
on a public network D such as the Internet, a user terminal A' used by a user A such as an individual or an organization for communicating information by means of the public network, for making transactions, and for obtaining goods and services;
an EC site B', provided by a service provider B such as an individual or an organization, accessible (connectable or operational) via the public network, for providing a framework for browsing goods and services and ordering a transaction;
a settlement site C', provided by a settling agent C such as an individual or an organization having a contract with the user A and service provider B, intermediating between the user A and service provider B to delegate the transfer of money of transactions, providing a framework for handling the credit service through the public network D;
   wherein the terminal A', site B' and site C' are interconnected.

The user terminal A' used by the user A is comprised of a display unit, memory/calculation unit, and input unit, and may be a general personal computer having a communication capability. The EC site B' provided by the service provider B has therein an EC site server arranged by the service provider for browsing goods and services and for ordering commercial transaction, and a communication server for performing communication with a program which is arranged by the agent acting for payment C and is sent to the user terminal A'. The settlement site acting for payment C' provides a settlement site server acting for payment, which performs communication with the program being sent to the user terminal A' and checks for the protection of alteration of the received information by using check procedure of the Internet mark (IM) which is well known in the Internet systems.

In addition, a monetary facility E acting for payment is intermediated between the user A and the settlement agent acting for payment C, however there may be a case in which the monetary facility E may become a settlement agent and provides a settlement site acting for payment by itself. In such a case the monetary facility E is not required in Fig. 1. Also in Fig. 1, there are two servers in the EC site B', however only one server may be provided which may serve the functionality of both servers.

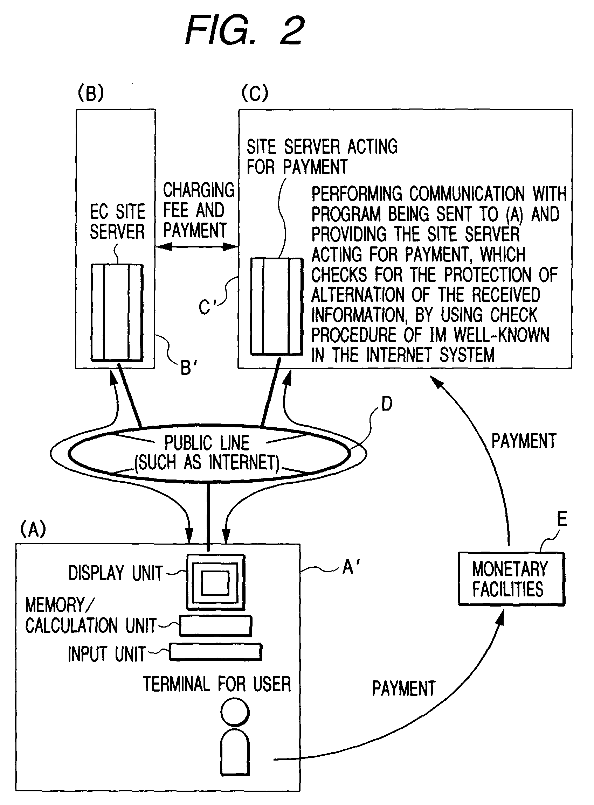

An exemplary system configuration shown in Fig. 2 is a simplified version of the exemplary system configuration of EC site B' shown in Fig. 1, where the EC site B' provides only an EC site server arranged by the service provider without providing a communication server performing communication with the program which is provided by the settling agent acting for payment C and sent to the user terminal A'.

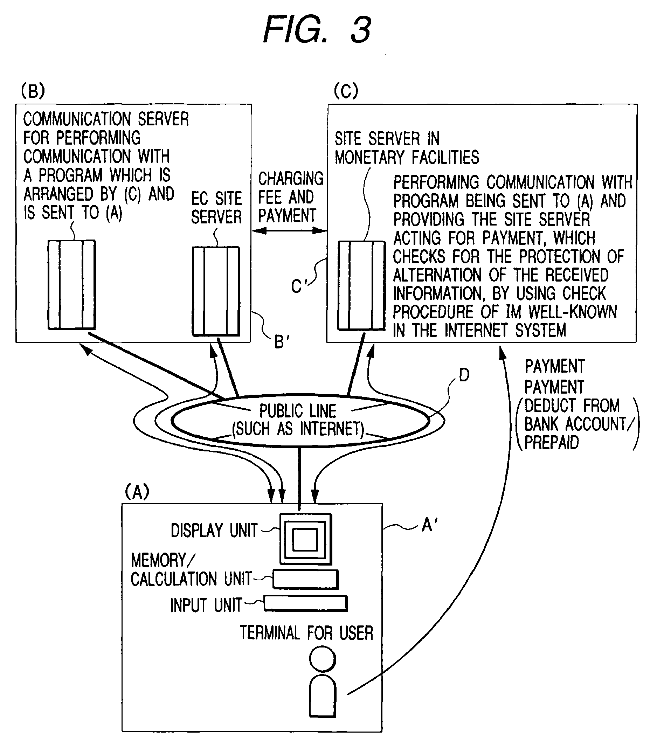

Another system configuration shown in Fig. 3 is an example in which a monetary facility E takes the role of the agent acting for payment C. The configuration of sites and the like is arranged as similar to Fig. 1, with the exception that the monetary facility E in the system configuration shown in Fig. 1 is removed. In such a system as arranged as having been described above, when a user A desires to purchase goods from the service provider B, the user A uses the user terminal A' to communicate with the EC site B' provided by the service provider B, then orders goods and services on the EC site B' and asks the agent acting for payment C for the settlement of payment.

Then, referring now to the flow chart shown in Fig. 4, the process flow of the electronic commerce performed on a system shown in Fig. 1 through Fig. 3 will be described below. The flow chart shown in Fig. 4 is focused primarily on and depicts the transaction performed on the EC site B' provided by the service provider B between the user A and service provider B, while the transaction with the agent acting for payment C is not depicted.
(1) The user A selects business objects such as goods and services on the EC site B' provided by the service provider B (step 41).
(2) The user A orders the business objects on the EC site B' of the service provider B and instructs the way of accounting (step 42).
(3) The user A checks the business content on the EC site B' of the service provider B and the way of accounting (step 43).
(4) The user A receives the goods or services ordered by the EC site B' of the service provider B (step 44).

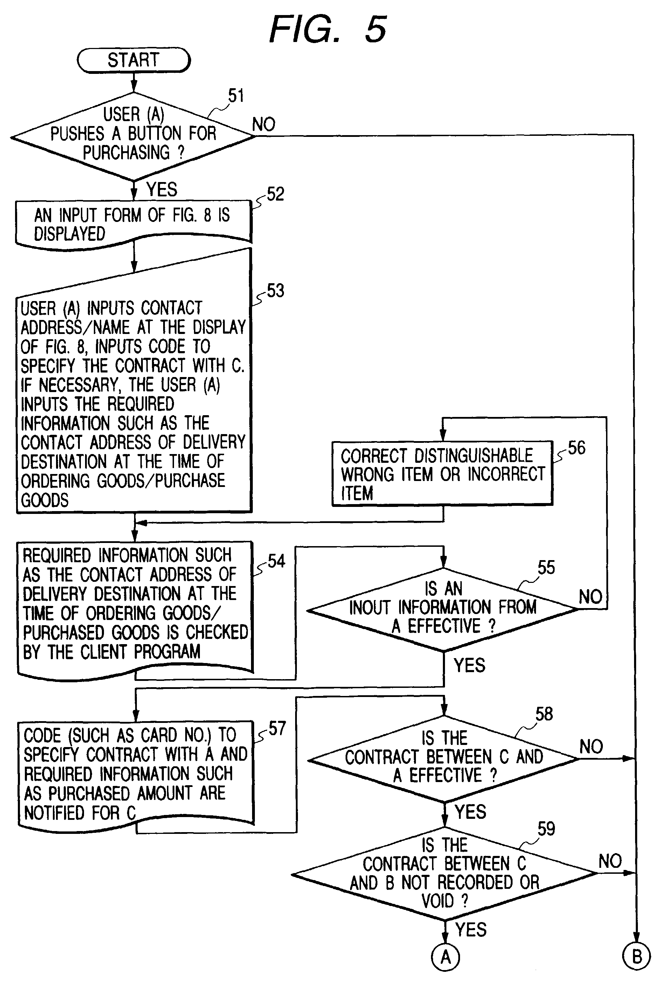

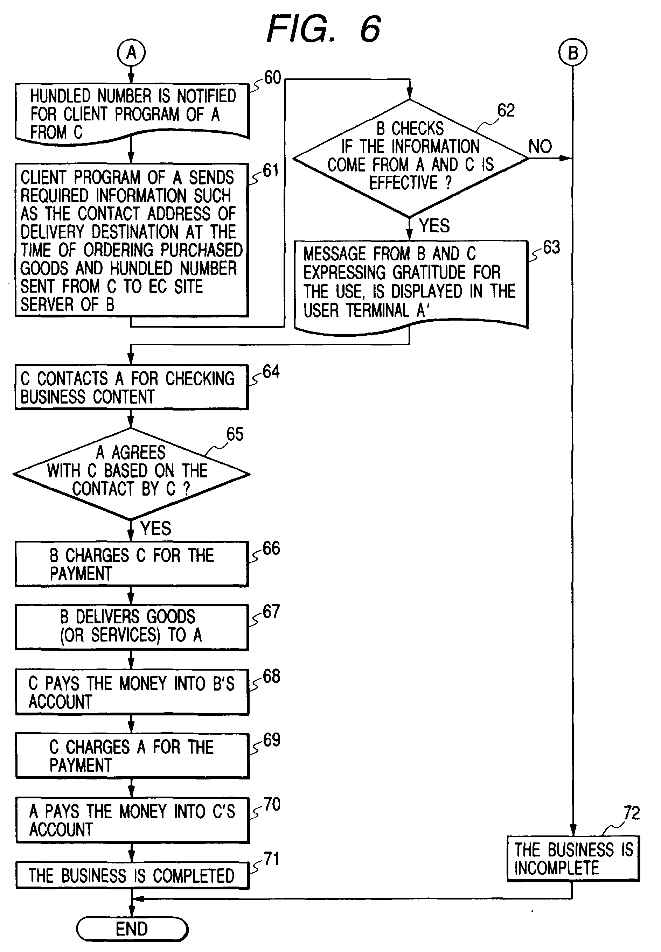

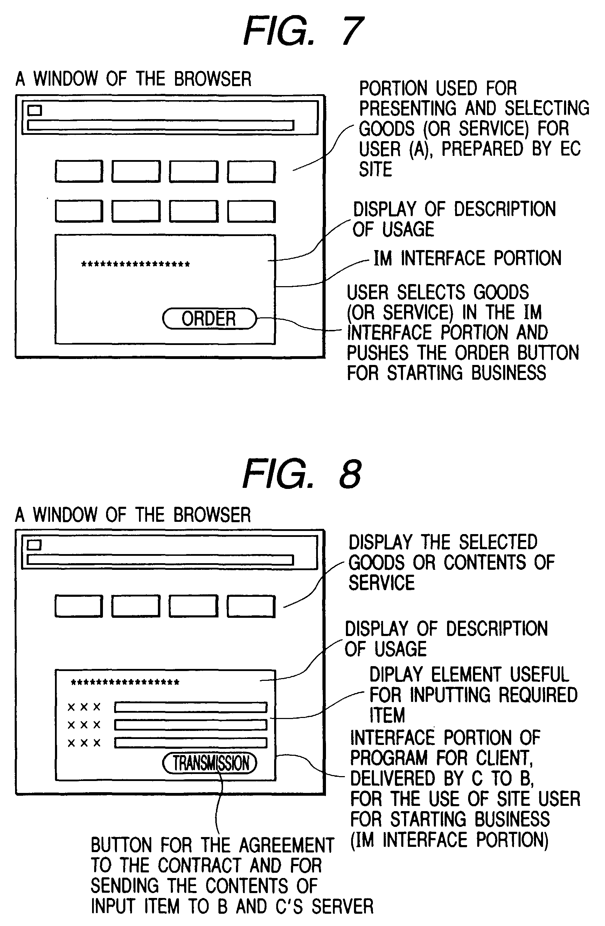

Fig. 5 and Fig. 6 show flow charts illustrating detailed process flows when performing electronic commerce using the electronic commerce system in accordance with the preferred embodiment of the present invention, Fig. 7 through Fig. 13 show some exemplary display screens displayed on the display unit of the user terminal A'. The process flow shown in Fig. 5 and Fig. 6 will be described below in greater details with reference to examples of display shown in Fig. 7 through Fig. 13.

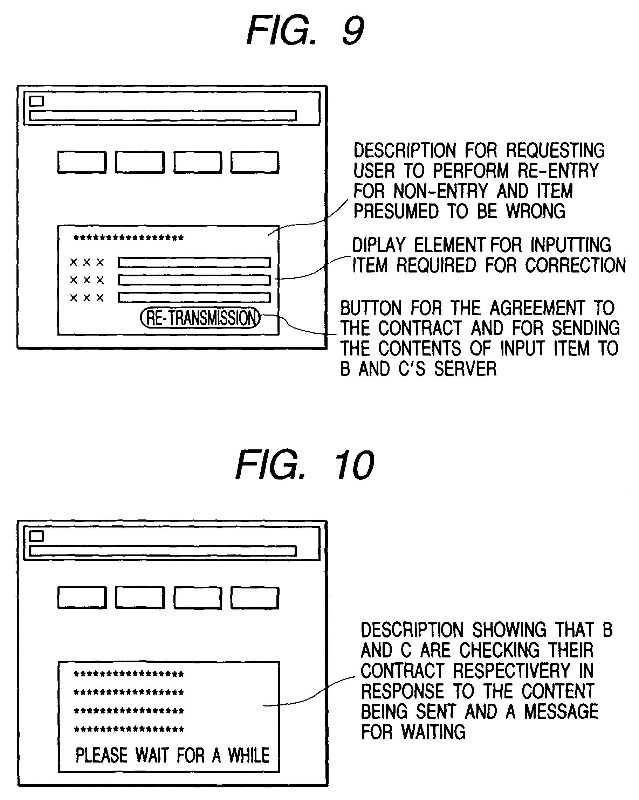

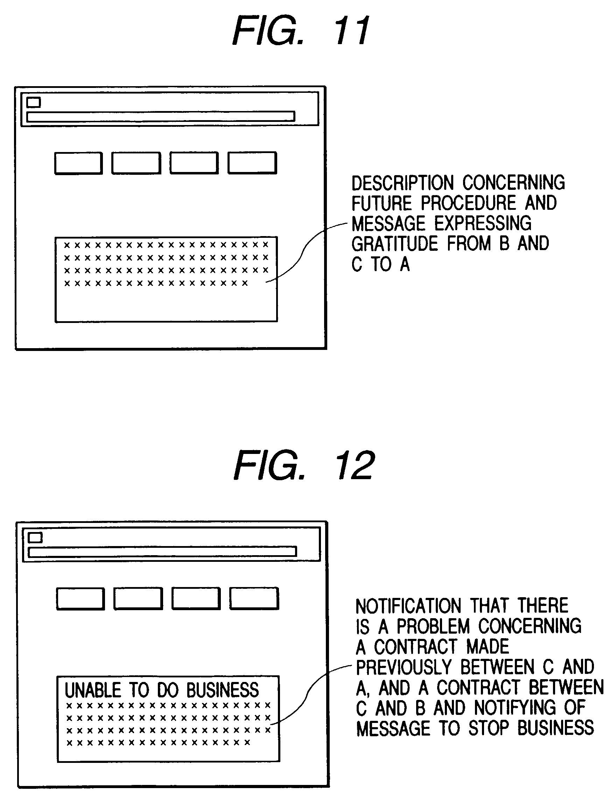

The embodiment as described below with reference to Fig. 5 and Fig. 6 is an exemplary process to which the present invention may be applied, having a system configuration as described above and shown in Fig. 1, in which the membership ID number of the user is not used for the payment. The user instead tells the system provided by the settlement agent about the amount and service provider used, for each transaction, to obtain the agreement on the transaction. The user then receives a process handling number newly issued at this time and notifies the process number to the company performing commerce to complete a business. This embodiment may correspond to the system (5) as having been described above in the prior Art section. The embodiment described with reference to Fig. 5 and Fig. 6 is the process from step 42 to step 44 in the process flow described with reference to Fig. 4. Also in this embodiment, it is assumed that the procedure of a contract of settlement for payment in advance between the user A and an agent acting for payment C has been already completed.
(1) The user A uses the user terminal A' to access the EC site B' provided by the service provider B through the public network D before beginning the process to display on the display unit of the user terminal A' goods and services provided by the service provider B from the EC site B' then selects one or more goods (or services) if needed. The selected items will be transferred to the EC site B'. The communication server provided by the agent acting for payment C in the EC site B' sends a client program being used by the user terminal A' and the IM interface portion used for performing transactions to the user terminal A'.
(2) The display unit of the user terminal A' will display an exemplary display screen as shown in Fig. 7. The IM interface displayed contains the specification of goods and services being ordered, detailed description of goods and services, description of usage and the like, along with a button for placing an order, labeled "order" (step 51).
(3) When the user pushes a button for purchasing goods or services in the IM interface portion displayed in Fig. 7, the program considers that the user wants to buy the goods or services, and sends the purchase information to the EC site B'. The EC site B' sends to the user terminal A' the interface portion of the client program to be distributed to the user A at the EC site B', in order for the agent acting for payment C to ask the user the information required for a business to be complete. As a result another exemplary display screen will be displayed in the IM interface portion as shown in Fig. 8, on the display unit of the user terminal A' (step 52).
(4) In the interface screen shown in Fig. 8 for the user A to enter the information necessary for a transaction, an area will be displayed containing fields for entering information such as name, contact address, and the like, along with a button labeled "send" for sending the entered information to the server. In the display screen provided by the service provider B other than the area of input fields, some terms in addition to the description of items shown in Fig. 7, such as the payment method, the office address, name of president, contact address of service provider B, and the like will be displayed. The user A uses this display to fulfill the fields with information required for ordering goods, including the contact address, name, the contract number for the agent acting for payment C (some information such as member ID, card number if the agent acting for payment C is a sale on credit company, code number, authentication code, user ID, and the like), the shipping address, contact address of shipping destination, payment method, and clicks "send" thereafter (step 53).
(5) The information entered in step 53 will be transferred to the communication server in the EC site B'. The information required at the time of order such as the shipping address, contact address of delivery destination will be checked by the client program to see whether the information entered by the user A is valid or not. During the validity check, an interface portion will be displayed on the display of the user terminal A' as shown in Fig. 10. This display screen will show the user that the service provider B and the agent acting for payment C are respectively checking the contract in response to the submitted content and display also a message for waiting a while (step 54 and 55).
(6) If the information entered by the user A is determined to be invalid because of an error found in the information in step 55, the communication server of the EC site B' sends to the user terminal A' another interface for requesting the user to correct the information. The display unit of the user terminal A' will display another screen as shown in Fig. 9, instead of the screen of Fig. 10. This interface screen displayed therein will contain a description for requesting the user to perform reentry for empty fields and correct items presumed to be wrong, a display component for entering required information to be corrected, and a button labeled "resend" for sending the user information again. The user may use this display screen to correct and add the input information. The validity of the correction or addition of the input information will be determined again by iterating the step 54 and 55 (step 56).
(7) In the process step 55, once the validity check of input information through the service provider B has been complete, the communication server in the EC site B' will notify the settlement site server acting for payment C' of any information needed such as the contract number for specifying the contract with the user A (such as credit card number), the purchased item(s), the amount of purchase and the like (step 57).
(8) The settlement site server acting for payment C' will check the validity of contract between the agent acting for payment C and the user A. If the contract is valid, then the settlement site server acting for payment C' further determines whether the contract between the agent acting for payment C and the service provider B is unregistered or void (steps 58 and 59).
(9) As the result of validity check in step 59, if the contract between the agent acting for payment C and the service provider B is determined to be effective, neither unregistered nor void, then the settlement site server acting for payment C' will notify the client program of the user A in the communication server of the EC site server B' of the process handling number to be used in this transaction. This process handling number will be immediately displayed on the user terminal (step 60).
(10) The client program of the user A will send to the EC site server of the service provider B any necessary information for ordering items such as the contact address of the shipping address of purchased items, as well as the process handling number sent from the settlement site server acting for payment C' (step 61).
(11) The EC site server that is the service provider B determines the validity of information supplied from the user A and the agent acting for payment C. When the transaction is complete, the server together with the agent acting for payment C will send a message expressing gratitude for the use of this server to the user to display it on the user terminal A'. An example of the screen displayed on the user terminal A' in this condition will be shown in Fig. 11, there is displayed a message expressing gratitude to the user A along with description on the procedure thereafter (steps 62 and 63).
(12) Thereafter, the agent acting for payment C will contact the user A for checking the business content. In general the communication will be often carried out by email. Alternatively any other means such as phone calls, facsimile, or postal service may also be used, or an interview may be another solution. The user A will agree with the agent acting for payment C based on the contact by the agent acting for payment C (steps 64 and 65).
(13) The service provider B will charge the agent acting for payment C for payment when it delivers the goods or services to the user A (steps 66 and 67).
(14) The agent acting for payment C will pay the charged amount to the account of service provider B, while the user A will pay the charged amount to the account of agent acting for payment C. This completes a transaction (steps 68 through 71).
(15) If in step 51 the "order" button was not pressed for a predetermined period of time, or the contract was determined to be invalid in steps 58 and 59, or the transaction business is not complete in step 62, as the transaction business is incomplete, a display as shown in Fig. 12 will be appeared on the screen of the display unit of the user terminal. This display message tells the user that there has been notified a trouble on the contract in advance to a transaction between the agent acting for payment C and the user A, or on the contract between the agent acting for payment C and the service provider B and that the current transaction will be canceled (step 72).

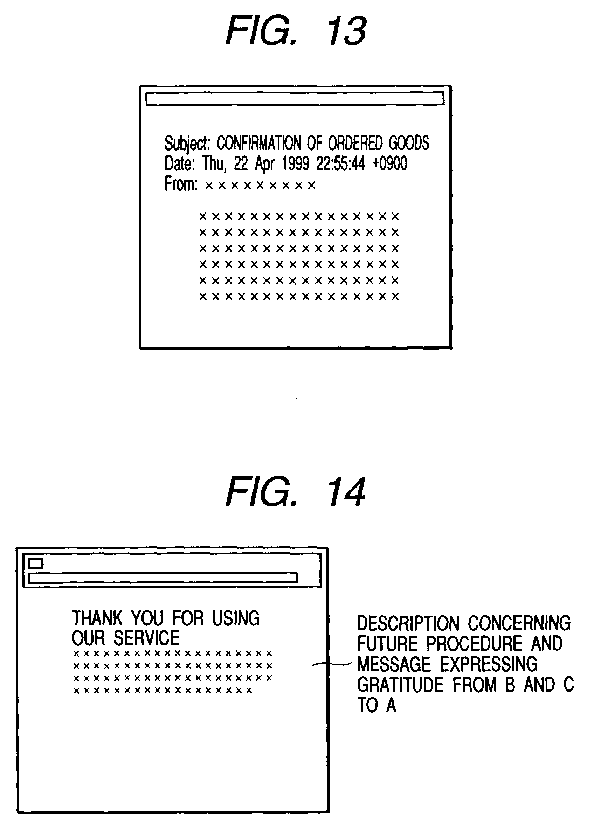

Referring to Fig. 13, there is shown an example screen message of mails sent to the user A from the agent acting for payment C for confirming the business content in step 64 above. If the user does not reply to the sender for a predetermined period of time, the agent acting for payment C will consider that this transaction is a mischief and will stop the business. The user may also cancel the transaction at this time.

In the process in accordance with the present embodiment of the present invention as described above, the agent acting for payment C will contact the user A for confirming the business content at steps 64 and 65, and based upon the contact, the user A will send the agreement to the agent acting for payment C to proceed the process thereafter, such as the shipping and delivery of products or services. However this confirmation process is not essential to the present invention and may be omitted.

In accordance with the process steps of the embodiment as described above, the communication server provided in the EC site B' by the agent acting for payment C may provide the IM interface portion to the user terminal A' for processing transactions, and classify the information entered by the user A and required for a transaction into an information required by the agent acting for payment C and an information required by the service provider B so as to transfer only the least necessary items to respective destination. This may prevent the contract number of the user A with the agent acting for payment C (such information called the membership number, code number, certification code, user ID, or card number if the agent acting for payment C is a sale on credit company) from being misused by the service provider B. Each transaction will be performed based on a process handling number that is effective information for a specific transaction so that a safer and more secure business may be accomplished.

Furthermore, in the process in accordance with the preferred embodiment of the present invention, when the settlement site acting for payment C' communicates with the program sent to the user terminal A' (through the communication server installed in the EC site B'), the checking is performed for protecting the transaction information against alteration by means of verification procedure of Internet mark (IM) well known in the Internet systems. Therefore, this may protect transactions against any spoofing by a malicious third party, and against any pretension of service provider by a third party during transactions.

The process steps as described above in accordance with the preferred embodiment of the present invention is an example system having a communication server provided by an agent acting for payment C in a EC site B'. Next, a simplified configuration of system having no communication server provided by an agent acting for payment C in the EC site B' as shown in Fig. 2 will be described below.

The system shown in Fig. 2 performs normal communication between the user terminal A' and the EC site B' without using IM. The IM interface portion for performing the transaction used by the user terminal A' will be transferred from the settlement site acting for payment C' to the user terminal A'. The process of transaction will be performed as similar to the process flow described above with reference to Fig. 5 and Fig. 6.

The difference is that the input information about an order at step 53 will be sent to the settlement site acting for payment C' and checked therein, and that the process following this step 53 will be proceeded without IM interface. The description of the following procedure as described with reference to Fig. 11 and a message expressing gratitude to the user A will be displayed in the normal browser window provided by the EC site B', rather than in the IM interface portion, as shown in Fig. 14.

This simplified system may accomplish almost the same result as the system shown in Fig. 1.

Next, the process flow of the system shown in Fig. 3, in which the agent acting for payment is served by a monetary facility, will be now described below in greater details. This embodiment may be effective in case that when a small number of options of selectable products and service are offered, the service provider may provide the products and services by renting part of another EC site, without having its own site. Needless to say, a service provider may own its proprietary site. The process flow in this case will be proceeded as similar to the system shown in Fig. 1, and by using the similar display of transaction, with the cooperation with a communication server in an EC site provided by a monetary facility, which acts as a settlement agent. However it should be noted that since the agent acting for payment is a monetary facility, the process flow following the validity check of a placed order of goods may be different from the process as described in the preceding embodiment with reference to Fig. 5 and Fig. 6.

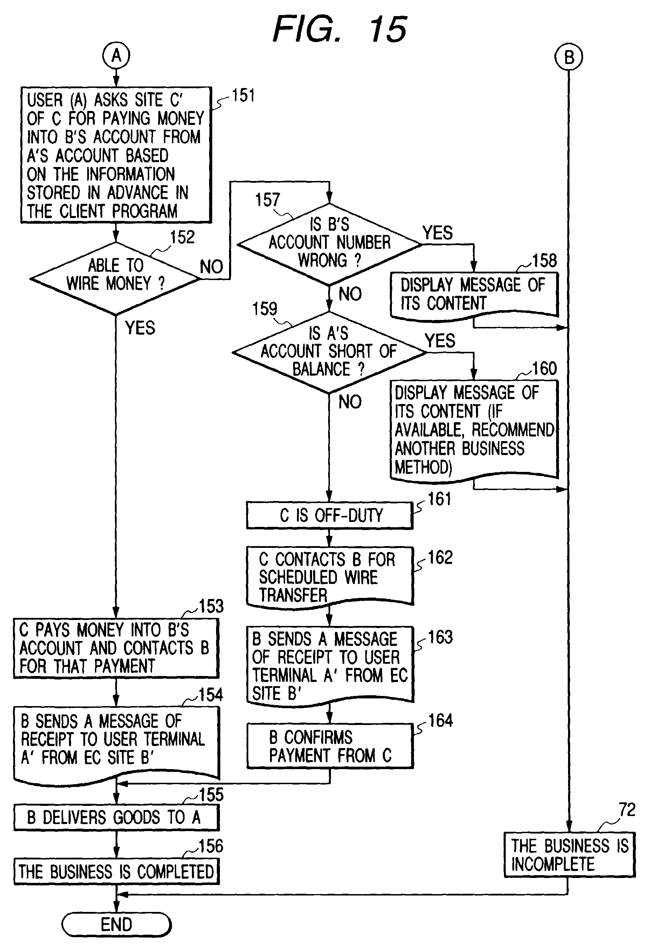

Referring to Fig. 15, there is shown a flow chart illustrating detailed part of process in accordance with the present embodiment. The process shown in Fig. 15 is executed after the end of the step 62 of the flow chart shown in Fig. 5 and Fig. 6.
(1) A user A will use a user terminal A' to perform the process from the step 51 to step 62 as shown in Fig. 5 and Fig. 6, in which the validity of the order will be checked and the process will be executed prior to the step of payment.
(2) The user A will ask the settlement site C' of the agent acting for payment C to transfer the amount from the account of user A to the account of service provider B based on the information stored in the client program (step 151).
(3) The settlement site acting for payment C' will check to see whether the asked transfer is allowed or not. Payment of the amount asked by the user A into the account of service provider B is performed, if allowable, and then the settlement site C' notifies the service provider B that the payment has been made. The service provider B upon receiving the notification, will send a reception message to the user terminal A' through the EC site B' (steps 152 through 154).
(4) Thereafter, the service provider B will accomplish the transaction by delivering the ordered item(s) to the user A (steps 155 and 156).
(5) While checking, in step 152, if the asked transfer of money cannot be done, the settlement site acting for payment C' will check to see whether the account number of the service provider B is right or wrong. If the account number is not correct, then a message will be sent to the user terminal A' and to the EC site B' indicating that the account number is not correct and the transaction will be canceled. In case in which the account number was mistyped, the process allows the user to redo beginning from the step 151 (steps 157, 158 and 72).
(6) While checking in step 157, if the account number was correctly typed, then the settlement site acting for payment C' will check to see whether the balance of the user A at the account is short or not. If the balance is short then the settlement site acting for payment C' will send a message to the user terminal A' and to the EC site B' indicating that the balance is insufficient and the transaction will be canceled. Alternatively the user may specify another option of payment method to accomplish the business, if available (steps 159, 160 and 72).
(7) In step 159, if the balance of user at the bank is sufficient the settlement site acting for payment C' will determine that the monetary facility which acts as the agent for payment C is closed at the moment and will inform the EC site B' of service provider B of the scheduled transfer (steps 161 and 162).
(8) The service provider B will send a reception message to the user terminal A' from the EC site B', check the deposited receipts from the agent acting for payment C, and perform the process following step 155 as described above (steps 163 and 164).

An effect similar to the system shown in Fig. 1 may be achieved by embodying a system in which the monetary facility may become the agent acting for payment, as shown in Fig. 3.

In the preceding embodiments, if a service provider having a limited line-up of products or services desires to provide the products or services by renting part of another EC site, without having its own site, the service provider may provide the line-up by opening a window of the IM interface supplied by the settlement site acting for payment in the EC site rented to display the products information and the like. The user may use this window to do everything about the business.

This mode is in other words such that an EC site providing some products announces lines of products that the site does not deal in but are related to the products they provide at that site and provides some space in the site for a service provider dealing in such related items. This mode allows users to access one EC site for shopping therein and do business with other service providers dealing in some related products without leaving the site, so that the user will enjoy the convenience.

As aforementioned in the foregoing description, in accordance with the present invention, the contract number of a user with a settling agent will be protected against the abuse by a malicious service provider, and the transaction will be made based on the process handling number effective only in a specific transaction, resulting in an accomplishment of much safer and secure transactions.

Also in accordance with the present invention, the validity will be inspected by means of the procedure of Internet mark (IM) well known in the Internet systems, to protect the transaction information against alteration. The present invention may protect transaction process information against spoofing and pretending as a false service provider by a malicious third party.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment chosen and described in order to explain the principles of the invention and its practical application to enable one skilled in the art to utilize the invention in various embodiments and with various modifications as are suited to the particular use contemplated. it is intended that the scope of the invention be defined by the claims appended hereto, and their equivalents.

## Claims

1. An electronic commerce system on a public network comprising:
a user terminal (A') used by a user (A);
an EC site (B') provided on a public network (D) by a service provider (B), accessible from said public network (D), for providing a framework for browsing the goods (and services) and ordering a transaction;
a settling site provided by a settlement agent (C) making a contract with said user (A) and said service provider (B) to carry out the transfer of price of said transaction between said user (A) and said service provider (B);
said user terminal (A'), said EC site (B') and said settling site being interconnected by said public network (D),
characterized in that
an information required for said transaction and input by said user (A) at said user terminal (A') is subdivided into an information needed by said service provider (B) and an information needed by said settlement agent (C);
said information needed by said service provider (B) is transmitted to said EC site (B') and said information needed by said settlement agent (C) is transmitted to said settling site.

2. The electronic commerce system as claimed in claim 1, characterized in that
said information needed by said service provider (B), being transmitted to said EC site (B') includes a user address, a shipping address, and a process handling number of said transaction transmitted from said settlement agent (C) to said user (A); and
said information needed by said settlement agent (C), being transmitted to said settling site includes a contract number provided by a contract between said user (A) and said settlement agent (C), a business content of a transaction at this time, and an information of said service provider (B).

3. The electronic commerce system as claimed in claim 1, characterized in that
when said settling site of said settlement agent (C) is a site established by a monetary facility (E), said information needed by said settlement agent (C), being transmitted to said settling site includes an information about a request on a transfer of the amount from a user's account to a service provider's account.

4. The electronic commerce system as claimed in claim 1, characterized in that
there is provided a communication server provided by said settlement agent (C) in said EC site (B') of said service provider (B) and said user (A) inputs an information required for a transaction through an interface display screen provided by said communication server and displayed on said user terminal (A').

5. The electronic commerce system as claimed in one of claims 1 or 4, characterized in that
an authentication is provided by an Internet mark checking procedure for protecting the information required for said transaction transmitted by said user (A) against any unauthorized alteration.

6. A method for doing an electronic commerce on the EC site (B') performing the electronic commerce by establishing the EC site (B') including the virtual shop on the network, the method comprising the steps of:
receiving an access to the EC site (B') via a public network (D) from a user terminal used (A') by a user (A);
providing goods or services information for said user terminal (A');
receiving an offer of goods purchase based on said goods or services information;
providing a program acquiring a process handling number for payment for said user terminal (A') based on said offer; and
receiving said process handling number from said user terminal (A'),
characterized in that the process executed by said program comprises the steps of:
accessing to other settlement sites from said user terminal (A');
acquiring said process handling number for payment associated with said goods purchase from said other settlement sites; and
providing said process handling number for payment from said step of acquiring for the EC site (B').

7. A method for doing an electronic commerce on the EC site (B') performing the electronic commerce by establishing the EC site (B') including the virtual shop on the network, the method comprising the steps of:
receiving an access to the EC site (B') via a public network (D) from a user terminal (A') used by a user (A);
providing for said user terminal (A') a display information having an offer information of goods information and goods purchase in the window display;
receiving an offer of goods purchase based on an offer information of said goods purchase;
providing a program acquiring a process handling number for payment for said user terminal (A') based on said offer;
receiving said process handling number from said user terminal (A'),
characterized in that the process executed by said program comprises the steps of:
displaying an input window for performing an acquisition procedure of said process handling number for payment from said user terminal (A') into the designated position of the display information provided by the EC site (B');
accessing to other settlement sites from said user terminal (A');
acquiring said process handling number for payment associated with said goods purchase from said other settlement sites; and
providing said process handling number for payment from said step of acquiring for the EC site (B').
